# EUROPEAN PATENT APPLICATION

(11) **EP 3 650 718 A1**
(43) Date of publication of application: **13.05.2020**
(21) Application number: 18827427.8
(22) Date of filing: 04.07.2018
(51) Int. Cl.: F16B 47/00, A47G 29/00, C09J 7/21, F16B 11/00, F16B 45/00

(54) **WALL SURFACE ATTACHMENT TOOL**

(30) Priority: 07.07.2017 JP 2017133348
(71) Applicant: Nitoms, Inc., Tokyo 1400002 (JP); Nitto Denko Corporation, Ibaraki-shi, Osaka 567-8680 (JP)
(72) Inventor: KONDA, Azusa, Tokyo 140-0002 (JP); TERADA, Itsumi, Tokyo 140-0002 (JP); TEZUKA, Hiroto, Tokyo 140-0002 (JP); SHINOZAKI, Wakako, Tokyo 140-0002 (JP)
(74) Representative: Grünecker Patent- und Rechtsanwälte PartG mbB
(86) International application number: PCT/JP2018/025307
(87) International publication number: WO 2019/009318

(57) **Abstract**

A wall fitting includes an anchor sheet 2 that is peelably adhered to wallpaper that is adhered on a wall surface and has an uneven surface, and a supported article B that is directly or indirectly attached to a surface of the anchor sheet 2. The anchor sheet 2 includes a substrate 21 and a pressure sensitive adhesive layer 22 formed on a side of the substrate 21 opposite to a side facing the supported article B. The pressure sensitive adhesive layer includes a re-peelable adhesive having such an adhesive strength that does not destroy the wallpaper when the anchor sheet is removed from the wallpaper. The substrate is made of fiber raw material that can deform to conform to the uneven surface of the wallpaper with the anchor sheet attached to the wallpaper.

## Description

### CROSS-REFERENCE TO RELATED APPLICATION

This application claims priority to Japanese Patent Application No. 2017-133348, the content of which is incorporated herein by reference.

### FIELD

The present invention relates to a wall fitting that is capable of attaching an article to a wall with a wallpaper having an uneven surface and capable of being adhered to the wallpaper.

### BACKGROUND

When an article such as a hook, a box-shaped body, and a mirror is to be attached to a wall surface, it is adhered thereto via a double-sided pressure sensitive adhesive tape or the like, or attached thereto via a fastener, such as nail and screw, in general.

However, there are many cases where wallpaper is adhered to a wall surface in a modern house in terms of protecting a wall substrate and an ornamental perspective. Therefore, a hook or the like attached to the wall surface via adhesive tape has a problem of causing the wallpaper to be peeled off along with an adhesive face of the adhesive tape when removing the hook or the like, and damaging not only the wallpaper but also a wall surface in some cases.

In these days, majority of wallpaper commonly spread is made of vinyl chloride and has an uneven surface. Therefore, when an attempt is made to fix a stopper such as a hook to wallpaper via a double-sided pressure sensitive adhesive tape, a stable fixing state cannot be maintained because an adhesive face of the double-sided pressure sensitive adhesive tape contacts only topmost portions of the wallpaper.

In particular, an article having a certain weight such as a metal article falls off in a moment and is therefore almost impossible to be attached to the wallpaper.

Meanwhile, according to a technique of attaching a stopper such as a hook to a wall surface via a nail or screw, the stopper can be surely attached thereto regardless of whether the surface is flat or uneven; however, there is a problem that a hole caused by a nail or screw remains not only in wallpaper but also in a wall surface, and hence damaging the wall surface in a similar manner to the case where the double-sided pressure sensitive adhesive tape is used.

Therefore, in the recent years, there has been proposed adhesive tape using water-swellable pressure-sensitive adhesive as a pressure sensitive tape that can fix an article to an uneven wall surface and that can be repeatedly detached without damaging the wall surface (see Patent Literature 1 below).

The pressure sensitive tape, in which its substrate is made of a water permeable material and has an interlaminar fracture strength being lower than the adhesive strength of the pressure sensitive adhesive, makes it possible to detach an article from the wall surface without damaging it by spraying of water onto the fractured substrate when the adhesive tape is peeled off from the wall surface, and thereby causing water to infiltrate water-swellable pressure-sensitive adhesive and swell the same to reduce an adhesive strength.

However, the pressure sensitive adhesive tape using this water-swellable pressure-sensitive adhesive has a problem that, when it is stored under high humidity conditions, its adhesive strength is lowered, and it cannot hold articles other than light-weight articles such as a poster due to the weak adhesive strength.

As described in Patent Literature 2 below, there is an adhesive tape using foamed resin having a restoring force such as acryl and urethane; however, there is a concern that its adhesive strength may be lowered under high humidity conditions in the same manner as in Patent Literature 1 below because a water-soluble acrylic resin is applied to its pressure-sensitive adhesive.

### CITATION LIST

### Patent Literature

Patent Literature 1: JP 2010-100688 A
Patent Literature 2: JP 2009-120742 A

### SUMMARY

### Technical Problem

In view of the above, an object of the present invention is to provide a wall fitting that is capable of being adhered to wallpaper having an uneven surface, capable of being easily removed therefrom without damaging the wall surface when detached, and capable of surely supporting an article having a certain weight such as a metal hook.

### Solution to Problem

The present invention is a wall fitting including: an anchor sheet that is peelably adhered to wallpaper that is adhered on a wall surface and has an uneven surface; and a supported article that is directly or indirectly attached to a surface of the anchor sheet, wherein the anchor sheet includes a substrate and a pressure sensitive adhesive layer formed on a side of the substrate opposite to a side facing the supported article, wherein the pressure sensitive adhesive layer includes a re-peelable adhesive having such an adhesive strength that does not destroy the wallpaper when the anchor sheet is removed from the wallpaper, and wherein the substrate is made of a fiber raw material that can deform to conform to the uneven surface of the wallpaper in a state where the anchor sheet is attached to the wallpaper.

The present invention may be configured so that the anchor sheet has a surface area larger than an area of the supported article overlapping the surface of the anchor sheet, and a ratio of the area of the supported article overlapping the surface of the anchor sheet relative to the surface area of the anchor sheet is 0.1 to 0.8.

The anchor sheet may be configured so that at least a part of the substrate, which is not overlapped with the supported article, is subjected to decoration.

At least a part of the substrate, which faces the pressure-sensitive adhesive layer, may be formed of Japanese paper.

It may be also configured so that a base plate is provided between the anchor sheet and the supported article, and the base plate has a front side to which the supported article is attached, and a back side on which an adhesive means is provided to allow the base plate to adhere to the anchor sheet.

At least a part of the base plate, which is not overlapped with the supported article, is subjected to decoration.

### BRIEF DESCRIPTION OF THE DRAWINGS

Fig. 1 is a front view showing a wall fitting according to a first embodiment in a case where a supported article is a box-shaped body with an opening formed on a front side.
Fig. 2 is a right side view showing the wall fitting according to the first embodiment in a case where the supported article is a box-shaped body with an opening formed on a front side.
Fig. 3 is a cross-sectional view showing the wall fitting according to the first embodiment that is held attached to a wall surface taken along the line A-A in Fig. 1 in a case where the supported article is a box-shaped body with an opening formed on a front side.
Fig. 4 is a schematic exploded perspective view showing a wall fitting according to a second embodiment in a case where a supported article is a hook.
Fig. 5 is a schematic exploded cross-sectional view showing the wall fitting according to the second embodiment in a case where the supported article is a hook.
Fig. 6 is an enlarged cross-sectional view showing the wall fitting according to the second embodiment that is held attached to a wall surface with no illustration of the supported article.
Fig. 7 is a front view showing the wall fitting according to the second embodiment in a case where the supported article is a box-shaped body with an opening formed on a top side.
Fig. 8 is a right side view showing the wall fitting according to the second embodiment in a case where the supported article is a box-shaped body with an opening formed on a top side.
Fig. 9 is a cross-sectional view showing the wall fitting according to the second embodiment that is held attached to a wall surface taken along the line C-C in Fig. 7 in a case where the supported article is a box-shaped body with an opening formed on a top side.
Fig. 10 is a schematic explanatory diagram showing a test sample used in a test for adhesion (cohesion) of a pressure sensitive adhesive tape according to Example 1.
Fig. 11 is a view showing graphs representing the surface shapes of substrates used in Example 1.

### DESCRIPTION OF EMBODIMENTS

### (First Embodiment)

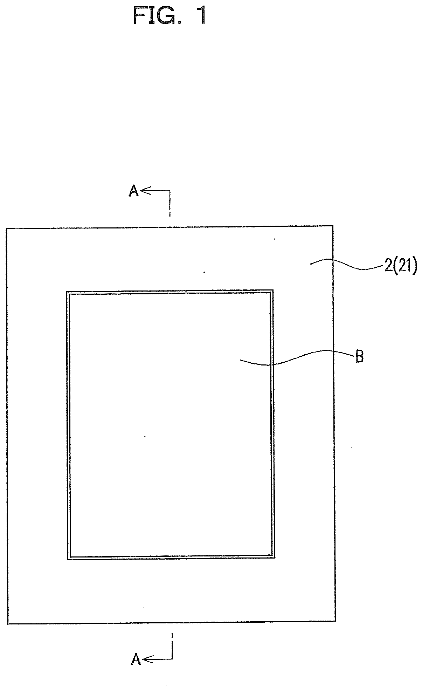

A first embodiment of the present invention will be described with reference to Fig. 1 to Fig. 3. However, the present invention is not particularly limited to this embodiment.

As shown in Fig. 1 to Fig. 3, a wall fitting according to the present invention includes an article support for wallpaper that is adhered to a wall surface (specifically, a wallpaper adhered to the wall surface), and a supported article that provides its intended function by being attached to the wall surface via the article support for wallpaper. The article support for wallpaper of this embodiment is composed of an anchor sheet 2 that is attached to a box-shaped body B as a supported article and is re-peelably adhered to the wallpaper W that is held attached to the wall surface.

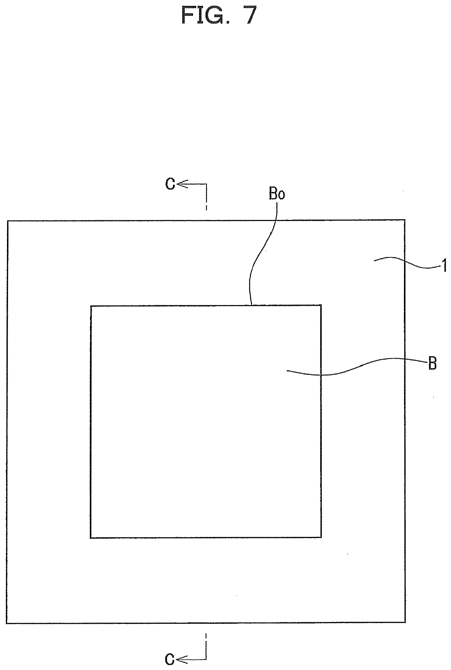

The supported article in this embodiment is a box-shaped body B. As shown in Fig. 1 to Fig. 3, when the supported article is a box-shaped body B having an opening Bo formed on the front side, the article to be stored can be put into and out through the front side of the box-shaped body B. On the other hand, as shown in Fig. 7 to Fig. 9 according to a later-described second embodiment, when the supported article is a box-shaped body B having an opening formed on a top side, the article to be stored can be put into in and out through the top side of the box-shaped body B. As such, the box-shaped body B configured to be suitable for the shape of the article to be stored can be served as the supported article.

The supported article in this embodiment is a box-shaped body B, but the article to be supported is not limited thereto. For example, various articles such as hooks (see the second embodiment), shelves, photograph or picture frames, corkboards, whiteboards, mirrors, watches, etc. can be served as the supported article. The supported articles can be conceptually classified into: articles such as boxes and shelves that are capable of supporting a bottom of an object (an object to be stored) when the supported article is in use; articles such as hooks, photograph or picture frames and corkboards that are capable of coming into locking engagement with a part of an object (an object to be hooked) when the supported article is in use; and articles such as whiteboards, mirrors and clocks that function independently.

When the article to be supported is the box-shaped body B, the position where the opening Bo may be provided on any of the front side (Fig. 1 to Fig. 3), the top side (Fig. 7 to Fig. 9 / the second embodiment), the lateral side, and the bottom side. The outer shape of the box-shaped body B is not limited to a rectangular parallelepiped shape as shown in Figures, and may be, for example, a semicircular cross-sectional shape or a polygonal shape. The supported article may also be transparent or opaque. As described above, the supported article is not particularly limited, and various articles can be served as the supported article.

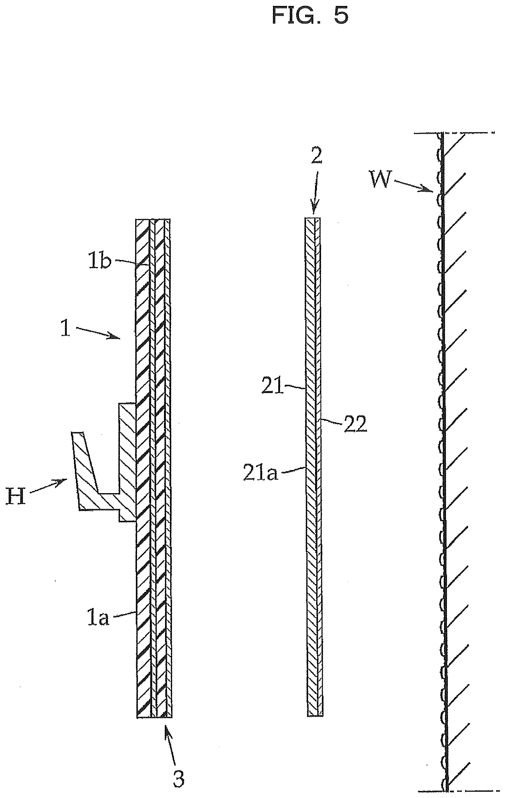

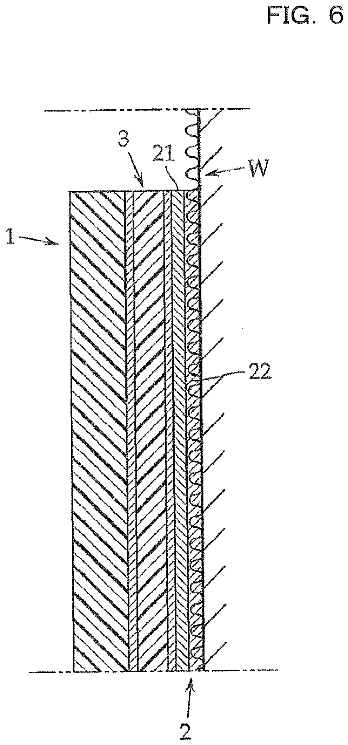

The article support for wallpaper according to the present invention can be adhered to, for example, wallpaper being made of vinyl chloride and having an uneven surface, to which a conventional article support for wallpaper is difficult to be attached. Thus, the following description will be given by taking, for example, the wallpaper W having an uneven surface (Fig. 5 and Fig. 6 for the later-described second embodiment, for example).

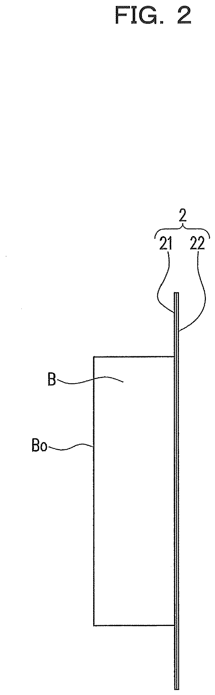

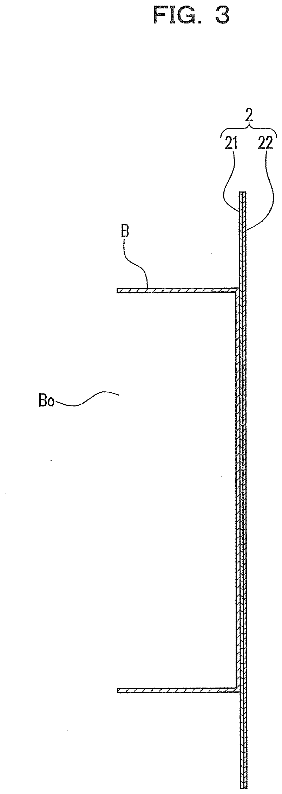

The anchor sheet 2 is formed to be larger than the area of the surface of the box-shaped body B facing the anchor sheet 2. The anchor sheet 2 includes a substrate 21 and a pressure sensitive adhesive layer 22 formed on one side of the substrate 21 (the layer structures in Fig. 2 and Fig. 3 are shown in a magnified manner). The substrate 21 in this embodiment is composed of Japanese paper having a thickness of 0.07 mm, but can be varied depending on the material, the weight, and the shape of the article to be supported. At least one side of the substrate 21, on which the pressure sensitive adhesive layer 22 is formed, may be composed of Japanese paper, and it may also be composed of a material other than Japanese paper in addition to Japanese paper, in which such a material is stacked on Japanese paper to form the substrate 21.

The substrate 21 is configured to have a surface to which the box-shaped body B is directly attached. The box-shaped body B of this embodiment is a separate body from the anchor sheet 2 at the time of selling, and the consumer attaches the box-shaped body B to the anchor sheet 2 after purchase. However, the present invention is not limited to this, and the anchor sheet 2 may be integrated with the anchor sheet 2 at the time of selling.

At least a part of the substrate 21, which is not overlapped with the box-shaped body B, is subjected to decoration. As long as the applied decoration is visible to the user, it may be applied on the front side of the substrate 21, or when the substrate 21 has a multilayer structure, the decoration may be applied within the layer so as to be seen through from the side of the box-shaped body B. The substrate 21 thus subjected to decoration enables the wall surface to be decorated, so that the product concerned can be categorized into interior goods to thereby enhance the consumers' motivation to purchase the product concerned. The decoration may be formed by, for example, printing a pattern, color or the like, embossing, and applying plastic beads or the like, and thus there is no particular limitation on the manner of application of the decoration.

The decoration may be composed of a pattern or design which does not relate to the supported article, and may relate to the supported article, for example, may be composed of a pattern or design imitating a frame when the supported article is a mirror, or a photograph or picture frame. The supported article can be subjected to decoration to produce such an aesthetic effect enabling itself to have an appealing appearance, even with a pattern or design unrelated to the supported article. However, a pattern or design related to the supported article can achieve an unified decoration with the supported article, and thereby further enhance the aesthetic effect. Also, the supported article can be subjected to decoration to conform with or match the pattern or design applied to the substrate 21. In such a case, the supported article itself may be subjected to decoration, or a decorated sheet may be allowed to adhere to the supported article. The decorated sheet may be either transparent or opaque.

The pressure sensitive adhesive layer 22 in the present invention is formed from a re-peelable pressure sensitive adhesive. The "re-peelability" herein means properties that are capable of being removed from the object to be adhered (wallpaper W in this embodiment). The pressure sensitive adhesive layer 22 has such adhesive strength as to enable the anchor sheet 2, when being detached from the wallpaper W, to be smoothly peeled off from the wallpaper W without destruction of the wallpaper W due to causing, for example, cohesive failure to the pressure sensitive adhesive layer 22. The aforementioned "destruction" herein means a state in which the wallpaper W is damaged to such an extent that the user feels uncomfortable when he or she visually observes the wallpaper W after peeling-off of the pressure sensitive adhesive layer 22 therefrom. Therefore, slight cohesive failure of the pressure sensitive adhesive layer 22 or slight destruction of the wallpaper W may be permissible, provided that such cohesive failure or destruction does not reach such a magnitude that the user feels uncomfortable.

As the pressure sensitive adhesive for forming the pressure sensitive adhesive layer 22, any adhesive may be employed as long as it has adhesive strength with the above re-peelability, but acrylic pressure sensitive adhesive is preferable in terms of costs, selectability of an adherend, thermostability and weather resistance. In this embodiment, acrylic pressure sensitive adhesive, whose base polymer is acrylic copolymer prepared by emulsion polymerization, is used.

The pressure sensitive adhesive layer 22 may be formed by any coating method, such as the emulsion coating, the hot melt coating, or the like. The thickness of the pressure sensitive adhesive layer 22 is preferably set from 10 to 50 µm in view of the workability when coating, the peelability when peeled off, and the adhesion to the wallpaper W. The thickness in this embodiment is set to 15 µm.

Setting the thickness of the pressure sensitive adhesive layer 22 to less than 10 µm is not preferable because it resultingly has an excessively low adhesive strength so that it does not develop the adhesion. Further, setting the adhesive thickness to more than 50 µm is also not preferable because it resultingly has an excessively strong adhesive strength so that it may damage the wallpaper when peeled off.

Further, the anchor sheet 2 in this embodiment has a rectangular shape without limitation thereto, and various shapes can be employed depending on the area of the anchor sheet 2 to be adhered to the wallpaper W and the aesthetic feeling to be given to the user, such as a circular shape, an oval shape, a polygonal shape other than the rectangular shape, a star shape, or a contour of a character, an animal or a vehicle, and the like.

Further, the anchor sheet is formed to have a surface area larger than the area of the box-shaped body B overlapped with the surface of the anchor sheet 2, and the ratio of the overlapped area of the anchor sheet with the box-shaped body B relative to the surface area of the anchor sheet is 0.1 to 0.8 (not less than 0.1 and not more than 0.8). The area ratio is preferably 0.2 to 0.6 (not less than 0.2 and not more than 0.6), more preferably 0.3 to 0.5 (not less than 0.3 and not more than 0.5). In this embodiment, the area ratio is about 0.4. By setting the area ratio in this manner, the anchor sheet 2 can be securely attached to the wallpaper W while bearing the weight of the box-shaped body B in use.

Here, the method for attaching the article support for wallpaper of this embodiment to the wallpaper W will be described. First, release paper (not illustrated) attached to the surface of the pressure sensitive adhesive layer 22 of the anchor sheet 2 is removed, and the anchor sheet 2 is attached to the wallpaper W. During this operation, it is preferable that the user press the anchor sheet 2 against the wallpaper W from the front side for ensuring the attachment.

Next, the anchor sheet 2 is preferably left at least six hours or more in order to ensure the time for allowing the substrate 21 of the anchor sheet 2 to conform to the uneven surface of the wallpaper W (hereinafter, the properties of the substrate gradually conforming to the uneven surface of wallpaper W is referred to as the "followability" of the substrate to wallpaper W). The aforementioned "followability" means that at least a part of many fibers forming the substrate 21 deforms so as to be curved to thereby allow the substrate to deform into a shape corresponding to the uneven shape of the uneven surface of the wallpaper W to result in conforming to the uneven shape. As to the "shape corresponding to the uneven shape", it is ideal that the surface of the substrate 21 after the deformation, which faces the wallpaper, has substantially the same shape as the uneven shape of the uneven surface of the wallpaper so as to be in close contact with each other. In practice, however, a slight difference in shape caused therebetween is unavoidable and thus is permissible.

The above-mentioned embodiment is described by taking, for example, the substrate 21 made of Japanese paper, of which a raw material is plant fiber; however, the substrate 21 is not limited to Japanese paper as long as it is paper material capable of following the uneven surface of the wallpaper W. For example, paper material such as crape paper having a fine uneven surface derived from the raw material fiber may be employed as the substrate 21 of the present invention.

The substrate 21 is not limited to paper material that is made of plant fiber as the raw material as long as it is capable of following the uneven surface of the wallpaper W (sheet-shaped material formed by gathering many fibers). For example, the substrate 21 may be made of synthetic fibers with rich flexibility such as nylon and acrylc. The substrate 21 made of fiber material enables to ensure a sufficient adhering area of the anchor sheet 2 to the wallpaper W and securely hold the box-shaped body B attached to the anchor sheet 2.

The box-shaped body B in this embodiment is attached to substantially the center of the base plate 1 via a double-sided pressure sensitive adhesive tape. However, the box-shaped body B may be attached to any position of an ornament board depending on the distribution of load applied to the box-shaped body B.

In this embodiment, the double-sided pressure sensitive adhesive tape for attaching the box-shaped body B to the base plate 1 is formed, for example, by application of rubber or acrylic pressure sensitive adhesive to both sides of a foamed olefin substrate. However, the double-sided pressure sensitive adhesive tape is not limited to this, and any pressure sensitive adhesive may employed as long as it has an adhesive strength of 3 N/20 mm or more to the substrate 21 of the anchor sheet 2, and a double-sided pressure sensitive adhesive tape of an acrylic foam type or an adhesive having a substrate (bubble-containing layer) that itself has adhesiveness may be employed.

### (Second Embodiment)

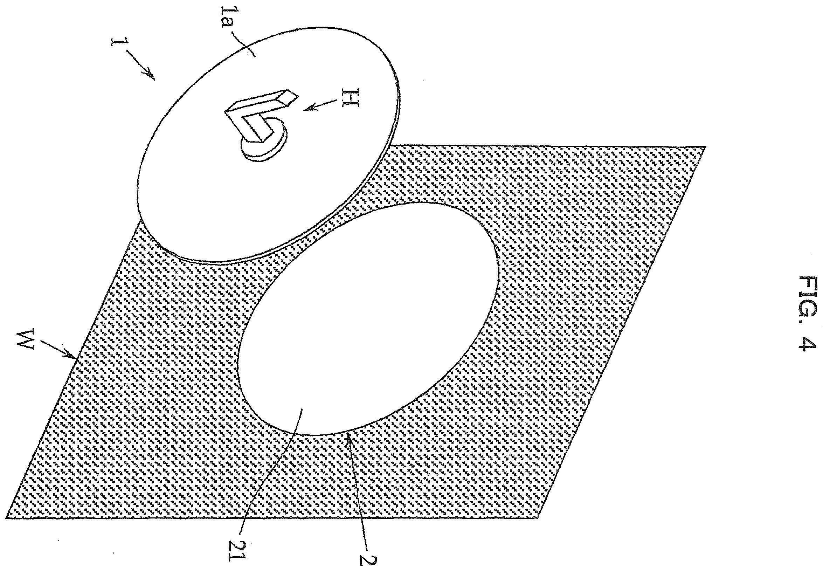

Next, a second embodiment of the present invention will be described with reference to Fig. 4 to Fig. 9. However, the present invention is not limited to this. The description common to the first embodiment will not be repeated unless it is particularly necessary.

The article support for wallpaper of this embodiment is composed of a base plate 1, to which a hook H as a supported article is attached, and an anchor sheet 2 that is re-peelably adhered to the wallpaper W in the same manner as the first embodiment. In this embodiment, the supported article (hook H) is thus indirectly attached to the surface of the anchor sheet 2. Further, the base plate 1, which is configured as a separate body from the anchor sheet 2, enables appropriate selection of the base plate 1 suitable for attaching the supported article (hook H), and thereby provide a widened flexibility in selection.

The base plate 1 has a front side 1a to which the supported article (hook H) is attached, and a back side 1b on which an adhesive means 3 is provided to allow the base plate 1 to adhere to the anchor sheet 2.

The base plate 1 is made of a material that does not cause deformation such as deflection when the supported article (hook H) is attached thereto, and is a transparent resin sheet made of polyethylene terephthalate (PET resin) in this embodiment. However, the base plate 1 can also be of opaque materials.

Since the base plate 1 of this embodiment is configured on the assumption that the weight of the supported article (hook H) attached to the base plate 1 is relatively heavy, the base plate 1 has a thickness of 0.5 mm so as to hardly cause deformation such as deflection and allow the front side of the base plate 1 to function as a surface. However, the thickness of the base plate 1 may be appropriately designed in accordance with the weight of the supported article (hook H).

The back side 1b of the base plate 1 of this embodiment may also be subjected to decoration in the same manner as the anchor sheet 2 of the first embodiment. Even in a case where the back side 1b is subjected to decoration, such decoration is visible from the front side when the base plate 1 is transparent. The decoration is not limited to the back side 1b, as long as it is applied so as to be visible from the user. In a case where the decoration is applied on the front side, or the substrate 21 has a multilayer structure, the decoration provided inside the layer can be configured to be visible through the layer(s) from the side of the supported article (hook H).

The adhesive means 3 in this embodiment is configured to have an adhesive strength of, for example, 3 N/20 mm or more relative to a later-described substrate 21 of the anchor sheet 2 to be able to provide high load-bearing capability when adhered to the anchor sheet 2.

The adhesive means 3 may be formed by a pressure sensitive adhesive layer that is formed from pressure sensitive adhesive having the above adhesive strength and that is provided on the back side 1b of the base plate 1. In this embodiment, for example, a double-sided pressure sensitive adhesive tape formed by application of rubber or acrylic pressure sensitive adhesive to both sides of a foamed olefin substrate is employed.

The base plate 1 in this embodiment is made of PET resin but is not limited thereto. Other resin sheets such as a sheet made of ABS resin or PP resin may be employed as long as deformation is not caused when an article is held attached. The base plate 1 may be made of wood and metal that does not cause deformation such as deflection.

The method of attaching the article support for wallpaper of this embodiment to the wallpaper W is the same as that of the first embodiment except for the steps following the attachment of the anchor sheet 2 to the wallpaper W.

Following the attachment of the anchor sheet 2, the base plate 1 is adhered in overlapping relationship with the substrate 21 of the anchor sheet 2 via a double-sided pressure sensitive adhesive tape 3. In this case, the hook H may be attached to the base plate in advance, or may be attached thereto after the base plate 1 is adhered to the anchor sheet 2.

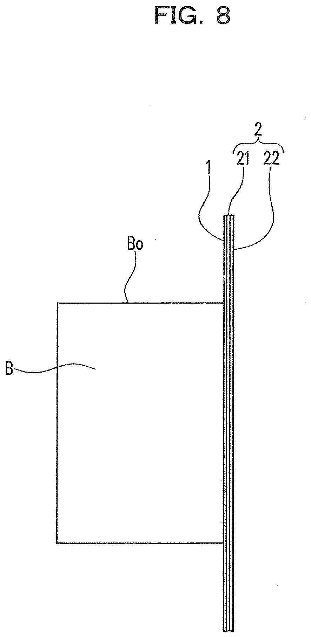

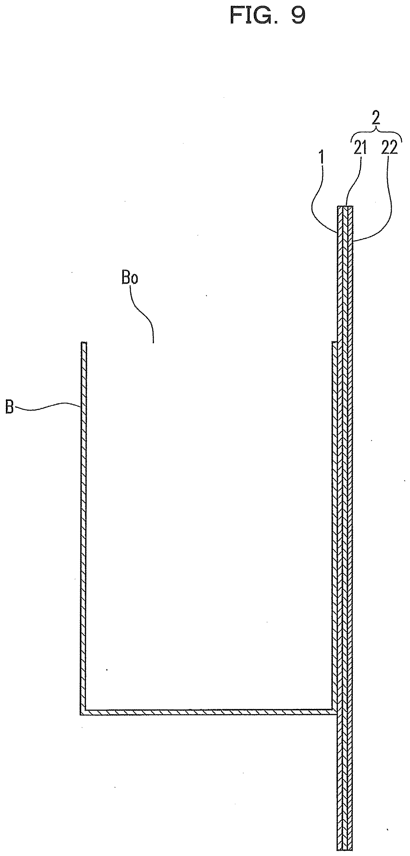

The description of this embodiment was made first for the case where the supported article is the hook H. However, the supported article may be the box-shaped body B as shown in Fig. 7 to Fig. 9. The member or part shown in Figures is an open top box-shaped body B having an opening Bo formed on the top side. The layer structures in Fig. 8 and Fig. 9 are shown in magnified manner. The supported article is thus not particularly limited in the second embodiment in the same manner as the first embodiment.

### (Functions and effects of aforementioned embodiments)

As described above, according to the aforementioned embodiments, the substrate 21 of the anchor sheet 2 to be adhered to the wallpaper W, which is formed of a paper material such as Japanese paper formed of long fibers, having a fine uneven surface, and being flexible, enables itself to contact the wallpaper while coming into conformity in shape with the uneven surface of the wallpaper to thereby ensure a sufficient adhered area to the wallpaper. Therefore, it is possible to surely hold a supported article on the wallpaper W having an uneven surface, which was conventionally difficult to achieve.

When the pressure sensitive adhesive layer 22 of the anchor sheet 2 is, for example, acrylic pressure sensitive adhesive that is re-peelable, freely deformable, and provides flexibility in selection of an adherend, the anchor sheet 2 can be easily removed from the wallpaper without adhesive remaining on the surface of the wallpaper when peeled off therefrom.

When the adhesive means 3 such as a double-sided pressure sensitive tape to be adhered between the base plate 1 and the anchor sheet 2 has an adhesive strength of 3 N/20 mm or more to the substrate 21, the base plate allows the supported article to stably fix thereto without being peeled off from the anchor sheet 2 even in a case where a relatively heavy supported article is attached to the base plate 1.

Moreover, when the base plate is formed of a material that does not cause deformation such as deflection even in a case where a supported article having a certain weight is attached to the base plate 1, the base plate 1 can be securely adhered to the anchor sheet 2 to thereby stably support the supported article.

### (DESCRIPTION OF EXAMPLES)

Hereinafter, the present invention will be described by way of specific examples. However, the present invention is not limited to the following examples at all. The following examples correspond in form to the second embodiment, but can also be applied to the form corresponding to the first embodiment.

As mentioned in the above prior art section, there is a problem that a conventional pressure sensitive adhesive tape, to which pressure sensitive adhesive having general re-peelablity is applied, has a weak adhesion to wallpaper having an uneven surface, and thus has difficulty in fixing a hook having even a relatively light weight to wallpaper for a long time.

Presently, Japanese paper, vinyl chloride sheet (PVC), biaxially oriented polypropylene film (OPP), polyethylene terephthalate (PET), and the like are used as the substrate, one side of which is coated with pressure sensitive adhesive, while any pressure sensitive adhesive is employed for this whether they are rubber type or acrylic type.

The inventors of the present invention assumed that the adhesion to wallpaper having an uneven surface may largely result from not the adhesive but the substrate, and thus performed a test to find a difference of adhesion to wallpaper having the uneven surface according to the substrate (Example 1: test for measuring an adhesion according to the substrate).

### (Example 1; test for measuring an adhesion according to the substrate)

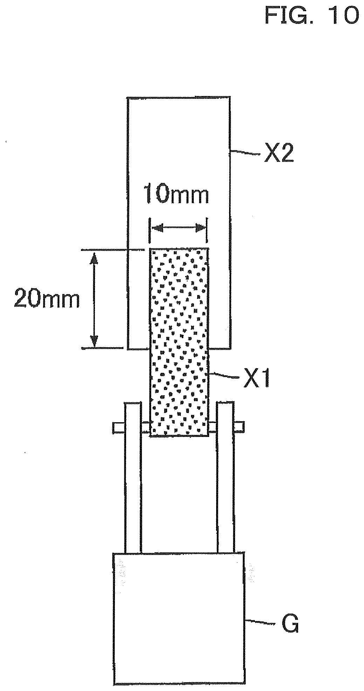

Sample strips X1 were formed respectively using Japanese paper (thickness: 0.07 mm), PVC (thickness: 0.07 mm), OPP (thickness: 0.04 mm), and PET (thickness: 0.025 mm) as substrates of the re-peelable pressure sensitive adhesive sheets, coated with re-peelable solvent acrylic pressure sensitive adhesive (BPS-6066 manufactured by TOYOCHEM CO., LTD.) to have A thickness of 15 µm. As shown in Fig. 10, each of the formed sample strips X1 was adhered to an adherend X2 (wallpaper (SD-06 manufactured by Asahipen Corporation)) so as to each have an adhered area of 10 mm × 20 mm, on which a roller having a weight of 2 kg was reciprocated once to thereby apply a load G (50 g) thereto, and left under 40°C for 30 minutes, so that the time when each sample strip has peeled off from wallpaper was measured. This test was performed three times (test time: one day (1,440 minutes)). Average values resulting therefrom are shown below.

**Table 1**

| Substrate | Retention Time (min) |
|---|---|
| Japanese paper | 1005 |
| PVC | 44 |
| OPP | 410 |
| PET | 575 |

From this result, it was confirmed that the adhesion duration differs depending on the substrates even for the pressure sensitive sheets, to which the same pressure sensitive adhesive with the same thickness was coated. It was also confirmed that Japanese paper is excellent in the adhesion for the pressure sensitive adhesive sheet, to which pressure sensitive adhesive with a thickness of 15 µm was coated. Standard Japanese paper was selected in this test from those distributed in the market as a substrate for masking tape because the purpose of the test was to merely confirm the adhesion of each general substrate. PVC, OPP, and PET were also selected from those widely distributed in the market for the same reason.

The present inventors assumed that better adhesion of Japanese paper to wallpaper having an uneven surface may arise from that Japanese paper increases the adhered area between wallpaper and the pressure sensitive adhesive, and thus observed a surface view and a cross sectional view of wallpaper used as adherend to thereby obtain the following findings.

### (Evaluation of wallpaper substrate)

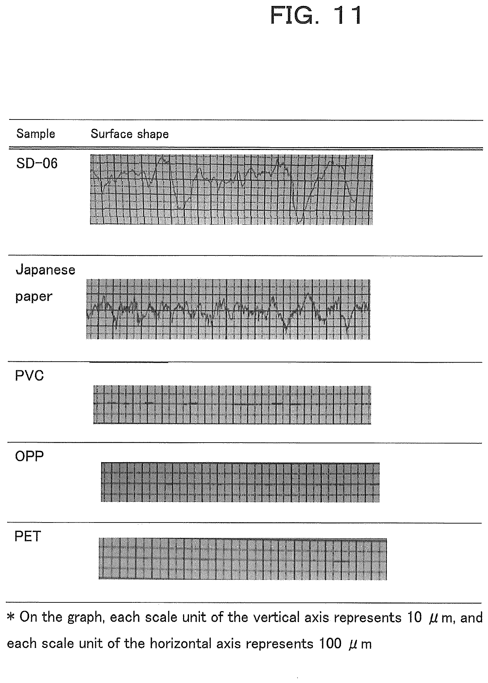

The wallpaper (SD-06 manufactured by Asahipen Corporation) had valleys and ridges arranged in a grid pattern with intervals between the ridges about 2 mm and a depth about 0.5 mm (see Fig. 11). It was assumed from this that the sample strips in Example 1 develop the adhesion by the pressure sensitive adhesive adhered to the ridges of the wallpaper, and therefore the following properties according to the substrates using the sample strips in Example 1 were confirmed.

### (Surface roughness of wallpaper and substrate)

It was assumed that the reason for better adhesion of, in particular, Japanese paper to the adherend such as wallpaper having an uneven surface lies in that Japanese paper gradually confirms to the uneven surface of wallpaper so as to cover the pressure sensitive adhesive adhered to wallpaper (hereinafter, the properties of Japanese paper gradually conforming to the uneven surface of wallpaper is referred to as the "followability" of Japanese paper to wallpaper). Then, the surface roughness of the ridges of wallpaper (SD-06 manufactured by Asahipen Corporation) used as the adherend in Example 1 and the surface roughness of each of the substrates used for sample strips were measured by a surface roughness measuring instrument (SE3500 manufactured by Kosaka Laboratory Ltd.; equipment conditions: wave length 0.8 mm, tip radius 2 pm, trace length 4.8 mm).

The results are shown below. The results are shown below. The arithmetic mean roughness (Ra) is a value determined by sampling the reference length from the roughness curve in the direction of the mean line, and summing and averaging the absolute values of the deviations from the mean line to the measured references of the sampled sections. This is a mean value representing the unevenness of the target section. Peak height (Ry) represents the length between the bottommost portion and the topmost portion.

**Table 2**

| Sample | Arithmetic Mean Roughness (Ra) µm | Peak Height (Ry) µm | Unevenness Mean Interval (Sa) mm |
|---|---|---|---|
| Wallpaper(SD-06) | 13.59 | 57.00 | ***** |
| Japanese paper | 5.95 | 23.20 | 0.30 |
| PVC | 0.21 | 1.10 | 0.22 |
| OPP | 0.11 | 1.09 | 0.50 |
| PET | 0.17 | 1.14 | 0.12 |

From this, it was found that the ridge portions of wallpaper have fine unevenness, and the surface of Japanese paper is much rougher than the other substrates.

### (Surface shape of wallpaper and substrates)

Next, the surface shapes of wallpaper and substrates are shown in Fig. 11 on the basis of the data obtained by the surface roughness measuring instrument (SE3500 manufactured by Kosaka Laboratory Ltd.; equipment conditions: wave length 0.8 mm, tip radius 2 pm, trace length 4.8 mm). It is found from this that Japanese paper has unevenness on the surface in a similar manner to the wallpaper (SD-06 manufactured by Asahipen Corporation). Contrary to this, the substrates such as PVC, OPP, and PET do not have such unevenness on the surface as that in Japanese paper. It is assumed from this that Japanese paper has better adhesion to wallpaper because Japanese paper bites into the uneven surface of wallpaper, while the unevenness on the surface of Japanese paper is finer than that of wallpaper. It is also assumed that Japanese paper has better adhesion because it is produced by mixing of plants (paper mulberry and oriental paperbush) that are fiber raw material, which causes elongation of fiber raw material in comparison with the other fiber materials. Contrary to this, it is assumed that the substrates such as PVC, OPP, and PET have a smooth surface because they are produced through a stretching process.

### (Rigidity and elasticity of substrate)

Next, the present inventors assumed that a factor that Japanese paper develops the adhesion to wallpaper lies in the followability of Japanese paper to the uneven surface of wallpaper. In order to confirm the factor, they checked the rigidity and the elasticity of the substrates (pure bending tester KES FB2 manufactured by KATO TECH CO., LTD., equipment conditions: bending curvature 2.5 cm-1 (0.4 - 2.5); sensitivity 4 (max); repeating time once; direction WARP; property calculation data (B1 = 0.5; B2 = 1.5; 2HB = 1.0). The results are shown in Table 3 below.

**Table 3**

| Substrate | Substrate Thickness (mm) | Bending Rigidity (gfcm²/cm) | Bending Elasticity (gf·cm²/cm) |
|---|---|---|---|
| Japanese paper | 0.07 | 0.0868 | 0.0431 |
| PVC | 0.07 | 0.1465 | 0.1102 |
| OPP | 0.04 | 0.1385 | 0.0338 |
| PET | 0.025 | 0.0731 | 0.0088 |

Among the measurements this time, the bending rigidity correlates to the softness felt by human when he bends an article. The larger this value, the harder the feeling, while the smaller the value, the softer the feeling. The elasticity correlates to the elasticity felt by human when he bends an article and straightens it back. The larger this value, the worse the elasticity, while the smaller the value, the better the elasticity. From the results, the bending rigidities of all the substrates of PVC, OPP, and PET except for Japanese paper becomes larger (harder) as the thickness increases. Contrary to this, it is apparent that Japanese paper has softness close to PET despite the fact that it has a thickness larger than PET. Regarding the elasticity, it was found that the elasticity of PVC is very low, but it cannot be assumed that particularly Japanese paper is superior in elasticity. It was thus found that the elasticity of the substrate does not relate to the adhesion of the Japanese paper to wallpaper.

### (Study on adhesive thickness)

It was found in Example 1 that the substrate made of Japanese paper develops the highest degree of adhesion to wallpaper when the adhesive is set at 15 µm. Therefore, the test was conducted in the same manner as Example 1 by changing the adhesive thickness because it was assumed that the substrates other than Japanese paper may develop similar adhesion to wallpaper by changing the adhesive thickness. The results thereof are shown in Table 4 below.

**Table 4**

| Adhesive Thickness(µm) | Substrate | Retention Time (min) | Retention Result |
|---|---|---|---|
| 15 | Japanese paper | 1005 | ○ |
| | PVC | 44 | × |
| | OPP | 410 | × |
| | PET | 575 | × |
| 25 | Japanese paper | 1345 | ○ |
| | PVC | 538 | × |
| | OPP | 1440 | ○ |
| | PET | 1440 | ○ |
| 35 | Japanese paper | 1440 | ○ |
| | PVC | 619 | × |
| | OPP | 1440 | ○ |
| | PET | 964 | × |

It is found from the above that the adhesion is improved by increasing of the adhesive thickness for OPP and PET that had low adhesion when the adhesive thickness is 15pm. This may be because the adhesive strength increases by the increased thickness of the adhesive, which causes the adhesive to penetrate into the uneven surface of wallpaper. The adhesion of PVC did not increase even by the increased thickness. This may be mainly because the elasticity of PVC is lower than that of the other substrates. It appears that the lack of elasticity does not allow the substrate to deform even by application of the force thereto and thus does not provide the substrate with the followability to wallpaper.

### (Inspection results on the adhesion of the substrates to the wallpaper having an uneven surface)

It could be found from the above experiments and confirmation that the substrate made of Japanese paper has advantage in the adhesion to the wallpaper having an uneven surface among the re-peelable pressure sensitive adhesive sheets. It could be also confirmed that the adhesion of Japanese paper is much more excellent than the substrate of other materials in the case of the thin adhesive. In addition to the unevenness of the surface of Japanese paper caused by the plant fibers that are fiber raw material, it is assumed that this advantage in the adhesion lies in that Japanese paper is much softer than the other substrates, which allows itself to develop good followability to the adherend (wallpaper) to thereby ensure the adhered area. The increased adhesion of the materials, such as OPP and PET other than Japanese paper could be confirmed when the adhesive thickness is increased, but the advantage of Japanese paper may not change when taking into account the cost and environmental perspectives.

From the above, it could be seen that Japanese paper is preferable as the substrate of the anchor sheet 2 in the case of the thin adhesive, while the other substrates (such as OPP and PET) can be used as the substrate when the adhesive thickness is increased.

In the present invention, it is important that the base plate 1 will not be peeled off from the anchor sheet 2 because the base plate 1, to which a stopper such as a hook H is attached, is used by being adhered in overlapping relation with the substrate 21 of the anchor sheet 2. Accordingly, the surface 21a of the substrate 21 is preferably not subjected to the back side treatment (release treatment).

However, a so-called pressure sensitive adhesive tape with a pressure sensitive adhesive layer having re-peelability, which is applied to the anchor sheet 2 of the present invention, is generally produced in a rolled form, and therefore, the surface 21a of the substrate 21 to be overlapped with the pressure sensitive adhesive layer is subjected to the back side treatment or is provided with release paper attached thereto.

The experiment below was thus performed to find such an adhesive strength that prevents the base plate 1 from being peeled off from the anchor sheet 2 in consideration of the fact that an adhesive strength obtainable for the substrate, which is not subjected to the back side treatment is not performed, is not obtainable when the substrate is subjected to the back side treatment (Example 2: adhesive strength between the base plate 1 and the anchor sheet 2).

### (Example 2: adhesive strength between the base plate 1 and the anchor sheet 2)

Comparison was made on the adhesive strength (adhesive strength on the back side) of the double-sided pressure sensitive adhesive tape (double-sided pressure sensitive adhesive tape No. 575 manufactured by Nitto Denko Corporation) having the same composition of the double-sided pressure-sensitive adhesive tape 3 of the base plate 1 relative to a plural kinds of commercially available masking tapes, which have substrates made of different types of Japanese paper, which were subjected to different types of release treatments. Using the substrate surfaces of four masking tapes A, B, C, and D subjected to the different release treatments as adherends, the double-sided pressure sensitive adhesive tape (double-sided adhesive tape No. 575 manufactured by Nitto Denko Corporation) was cut to have a width of 20 mm and adhered to each of the adherends, and a roller of 2 kg was reciprocated thereon once under the conditions of 23°C so that an adhesive strength when they are removed by the tensile test device (RTC-1210A manufactured by ORIENTEC Co., LTD.) in the 180 degree direction with a tensile rate of 300 mm/min after the elapse of 30 minutes was measured. The results are shown in Table 5 below.

**Table 5**

| Masking Tape | Adhesive Strength ( N/20mm) |
|---|---|
| A: No.720A manufactured by Nitto Denko Corporation | 2.7 |
| B: No.727 manufactured by Nitto Denko Corporation | 2.2 |
| C: No.7286 manufactured by Nitto Denko Corporation | 3.1 |
| D: No.S2051 manufactured by Nitoms, Inc. | 3.0 |

### (Example 3: adhesive strength of the article support for wallpaper relative to wallpaper)

A sample was prepared by attaching of the hook H to the article support for wallpaper configured as shown in Table 6 below, and being attached to wallpaper using the masking tapes, of which the adhesive strength was measured in Example 2, so as to confirm their adhesions.

**Table 6**

| Member | Size (mm) |
|---|---|
| Anchor sheet (masking tapes A, B, C, D) | 125 in diameter |
| Double-sided pressure sensitive tape (No. 575 manufactured by Nitto Denko Corporation) | 125 in diameter |
| Decorated board (PET: 1 mm) | 125 in diameter |
| Double-sided pressure sensitive tape (No. 575 manufactured by Nitto Denko Corporation) | 30 in diameter |
| Hook (750 g) | 30 in diameter |

In this Example, using wallpaper SD-06 manufactured by Asahipen Corporation is employed as an adherend, the same masking tapes as Example 2 were adhered to the adherend C, on which a roller of 2 kg was reciprocated once under the conditions of 23°C and left under the room temperature of 40 °C for 30 minutes, and then a hook H of 750 g was attached thereto and held for one month. This test was repeated five times, and it was found that double-sided pressure sensitive adhesive tapes with an adhesive strength of less than 3 N/20 mm fall off from the masking tapes.

**Table 7**

| Masking Tape | Adhesive Strength (N/20mm) | Adhesion Result |
|---|---|---|
| A: No. 720A manufactured by Nitto Denko Corporation | 2.7 | × |
| B: No. 727 manufactured by Nitto Denko Corporation | 2.2 | × |
| C: No. 7286 manufactured by Nitto Denko Corporation | 3.1 | ○ |
| D: No. S2051 manufactured by Nitoms, Inc. | 3.0 | ○ |

### (Inspection results on adhesion between the base plate and the anchor sheet)

It was found from Example 2 and Example 3 that the preferable adhesion of the anchor sheet 2 to the base plate 1 is such that an adhesive strength to the surface 21a of the substrate 21 of the double-sided pressure sensitive tape 3 is 3 N/20 mm or more.

### (Example 4: Followability ensuring time of the anchor sheet to the wallpaper)

The test below was performed to confirm the time period for allowing the masking tape D to conform to the unevenness of wallpaper (SD-06 manufactured by Asahipen Corporation) (followability ensuring time). Using the wallpaper (SD-06 manufactured by Asahipen Corporation) as an adherend, the masking tape D was adhered to the adherend so as to have an adhered area of 15 mm × 15 mm, and a roller of 2 kg was reciprocated thereon once under the conditions of 23°C so that a tensile shear adhesive strength when it is sheared by the tensile tester (AGS-X manufactured by SHIMADZU CORPORATION) in the 0 degree direction or in the horizontal direction relative to the adherend with a tensile rate of 50mm/min after the elapse of the predetermined time was measured. The results are shown in Table 8 below.

**Table 8**

| Elapsed Time (h) | Tensile shear strength (N/15mm) |
|---|---|
| 0 | 52.5 |
| 1 | 51.1 |
| 2 | 52.2 |
| 3 | 49.7 |
| 4 | 47.6 |
| 5 | 47.1 |
| 6 | 62.2 |
| 7 | 61.5 |
| 8 | 60.7 |
| 9 | 58.9 |

It was found from this that it is preferable to leave the anchor sheet at least six hours or more in order to allow the anchor sheet to conform to the wallpaper and then maintain an appropriate adhesive strength.

It was found from the above-described Examples and the like that the substrate is the primary factor for enhancing the adhesion to wallpaper having an uneven surface. Further, it was found that the substrate follows an uneven surface of wallpaper because it has an uneven face.

It is known that paper material is made of fiber raw material and has an uneven surface. In particular, Japanese paper, of which fiber raw material is long, may be highly advantageous as a substrate. Further, by forming the substrate by Japanese paper that is a relatively easily available material, there is an advantage of being able to easily achieve a configuration allowing the anchor sheet to deform to conform to the uneven surface of the wallpaper with the anchor sheet held attached thereto.

The configurations and the functions according to the aforementioned embodiments will be summarized as below. According to the aforementioned embodiments, there is provided a wall fitting including: an anchor sheet that is peelably adhered to wallpaper that is adhered on a wall surface and has an uneven surface; and a supported article that is directly or indirectly attached to a surface of the anchor sheet, wherein the anchor sheet includes a substrate and a pressure sensitive adhesive layer formed on a side of the substrate opposite to a side facing the supported article, wherein the pressure sensitive adhesive layer includes a re-peelable adhesive having such an adhesive strength that does not destroy the wallpaper when the anchor sheet is removed from the wallpaper, and wherein the substrate is made of a fiber raw material that can deform to conform to the uneven surface of the wallpaper in a state where the anchor sheet is attached to the wallpaper.

According to this configuration, the pressure sensitive adhesive layer of the anchor sheet includes a re-peelable adhesive having such an adhesive strength that does not destroy the wallpaper when the anchor sheet is removed from the wallpaper, and the substrate of the anchor sheet is made of a fiber raw material that can deform to conform to the uneven surface of the wallpaper in a state where the anchor sheet is attached to the wallpaper. Therefore, it is possible to ensure a sufficient adhered area of the anchor sheet relative to the wallpaper and surely hold the supported article directly or indirectly attached to the surface of the anchor sheet 2.

The anchor sheet may have a surface area larger than an area of the supported article overlapping the surface of the anchor sheet, and a ratio of the area of the supported article overlapping the surface of the anchor sheet relative to the surface area of the anchor sheet may be 0.1 to 0.8

According to this configuration, by setting the area ratio in this manner, it is possible to securely attach the anchor sheet to the wallpaper while bearing the weight of the supported article in use.

The anchor sheet may be configured so that at least a part of the substrate, which is not overlapped with the supported article, is subjected to decoration.

According to this configuration, the substrate 21 thus subjected to decoration enables the wall surface to be decorated, so that the product concerned can be categorized into interior goods to thereby enhance the consumers' motivation to purchase the product concerned.

Further, at least a part of the substrate facing the pressure-sensitive adhesive layer may be formed of Japanese paper.

According to this configuration, with Japanese paper that is a relatively easily available material, it is possible to easily achieve a configuration in which the anchor sheet can deform to conform to the uneven surface of the wallpaper in a state where the anchor sheet is attached to the wallpaper.

It may be also configured so that the base plate is provided between the anchor sheet and the supported article, and the base plate has a front side to which the supported article is attached, and a back side on which an adhesive means is provided to allow the base plate to adhere to the anchor sheet.

According to this configuration, a base plate suitable for attaching the supported article can be appropriately selected.

At least a part of the base plate, which is not overlapped with the supported article, is subjected to decoration.

According to this configuration, the base plate thus subjected to decoration enables the wall surface to be decorated, so that the product concerned can be categorized into interior goods to thereby enhance the consumers' motivation to purchase the product concerned.

As described above, according to the aforementioned embodiments, it is possible to secure a sufficient adhered area of the anchor sheet relative to the wallpaper, and surely hold the supported article directly or indirectly attached to the surface of the anchor sheet. Therefore, it is possible to surely hold a supported article such as a hook on the wallpaper having an uneven surface, which was conventionally difficult to achieve.

### REFERENCE SIGNS LIST

1: Base plate
2: Anchor sheet
21: Substrate
22: Pressure sensitive adhesive layer
3: Adhesive means
B: Supported article (box-shaped body)
Bo: Opening of a box-shaped body
H: Supported article (hook)
W: Wallpaper

## Claims

1. A wall fitting comprising:
an anchor sheet that is peelably adhered to wallpaper that is adhered on a wall surface and has an uneven surface; and a supported article that is directly or indirectly attached to a surface of the anchor sheet,
wherein the anchor sheet comprises a substrate and a pressure sensitive adhesive layer formed on a side of the substrate opposite to a side facing the supported article,
wherein the pressure sensitive adhesive layer comprises a re-peelable adhesive having such an adhesive strength that does not destroy the wallpaper when the anchor sheet is removed from the wallpaper, and
wherein the substrate is made of a fiber raw material that can deform to conform to the uneven surface of the wallpaper in a state where the anchor sheet is attached to the wallpaper.

2. The wall fitting according to claim 1,
wherein the anchor sheet has a surface area larger than an area of the supported article overlapping the surface of the anchor sheet, and a ratio of the area of the supported article overlapping the surface of the anchor sheet relative to the surface area of the anchor sheet is 0.1 to 0.8.

3. The wall fitting according to claim 1 or 2,
wherein at least a part of the anchor sheet, which is not overlapped with the supported article is subjected to decoration.

4. The wall fitting according to any one of claims 1 to 3,
wherein at least a part of the substrate, which faces the pressure sensitive adhesive layer, is formed of Japanese paper.

5. The wall fitting according to any one of claims 1 to 4,
wherein a base plate is provided between the anchor sheet and the supported article, and the base plate has a front side to which the supported article is attached, and a back side on which an adhesive means is provided to allow the base plate to adhere to the anchor sheet.

6. The wall fitting according to claim 5,
wherein at least a part of the base plate, which is not overlapped with the supported article, is subjected to decoration.
